# EUROPÄISCHE PATENTSCHRIFT

(11) **EP 3 191 326 B1**
(45) Veröffentlichungstag und Bekanntmachung des Hinweises auf die Patenterteilung: **28.10.2020**
(21) Anmeldenummer: 15763281.1
(22) Anmeldetag: 08.09.2015
(51) Int. Cl.: B60G 9/00, B60G 11/113, B60B 35/04, B60G 7/00, B60B 35/08, B60B 35/14, B60B 35/00

(54) **ACHSEINHEIT**
AXLE UNIT
UNITÉ D'ESSIEU

(30) Priorität: 12.09.2014 DE 102014218331
(43) Veröffentlichungstag der Anmeldung: 19.07.2017
(73) Patentinhaber: SAF-HOLLAND GmbH, 63856 Bessenbach-Keilberg (DE)
(72) Erfinder: KREINER, Kerstin, 63741 Aschaffenburg (DE); CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2015/070479
(87) Internationale Veröffentlichungsnummer: WO 2016/038025

(56) Entgegenhaltungen:
- EP-A2- 0 130 477
- WO-A1-2007/098927
- FR-A1- 2 291 888
- FR-A1- 2 547 544
- FR-A1- 2 967 112
- US-A- 3 792 434
- US-A1- 2009 230 649
- US-A1- 2010 225 157

## Beschreibung

Die vorliegende Erfindung betrifft eine Achseinheit, sowie ein Fahrwerksystem, insbesondere zum Einsatz in Nutzfahrzeugen.

Aus dem Stand der Technik ist bekannt, an Achseinheiten im Bereich der Radaufhängung Zusatzmotoren, wie beispielsweise hydraulische Einzelradantriebe anzubringen, um beispielsweise einen Anhänger bei abgehängtem Zugfahrzeug rangieren zu können oder bei großen Steigungen und/oder großer Last zusätzliche Antriebskraft auf die einzelnen Räder übertragen zu können. Dabei ist in der Vergangenheit eine große Verbesserung bereits dadurch erreicht worden, die zur Versorgung des Zusatzantriebes mit entsprechendem Hydraulikfluid benötigten Leitungen in den Achskörper einer starren Achse zu integrieren. Hierdurch konnte bereits der Bauraumbedarf der Achseinheit sowie der Bauraumbedarf des gesamten Fahrwerksystems reduziert werden und es konnten die bis dahin außerhalb der Achse bzw. des Achskörpers angeordneten Hydraulikleitungen in abgeschirmte Bereiche des Fahrwerks verlegt werden, in denen keine während der Fahrt des Nutzfahrzeuges aufgewirbelten Teile die Hydraulikleitungen beschädigen können. Als nachteilig bei den aus dem Stand der Technik bekannten Lösungen für Achseinheiten mit integrierten Hydraulikleitungen sowie aus diesen hergestellte Fahrwerksysteme hat sich die besonders aufwendige Fertigung gezeigt. Weiterhin ist das Gewicht der aus dem Stand der Technik bekannten Achseinheiten sehr hoch.

Die WO 2007/098927 A1 offenbart eine Achseinheit, bei welcher ein Längslenker an einem Achsrohr über eine Stahlbuchse festlegbar ist.

Die FR 2 967 112 A1, die FR 2 291 888 A1, die US2009/0230649 A1, die US 2010/0225157 A1 und die FR 2 547 544 A1 offenbaren Achssysteme bei denen in den Achsstummel Kanäle zum Betrieb von hydraulischen Antrieben eingebracht sind.

Die US 3,792,434 A offenbart ein Temperaturüberwachungssystem, bei dem Temperatursensoren im Achsstummel untergebracht und über seitlich nach außen führende Kabel angeschlossen sind.

Die EP 0 130 477 A2 zeigt ein Herstellungsverfahren für einen Achsstummel.

Es ist daher Aufgabe, die Fertigung für Achseinheiten mit integrierten Hydraulikleitungen zu vereinfachen sowie das Gewicht solcher Achseinheiten sowie der Fahrwerksysteme mit derartigen Achseinheiten zu reduzieren.

Diese Aufgabe wird gelöst mit einer Achseinheit gemäß Anspruch 1 sowie einem Fahrwerksystem gemäß Anspruch 10. Weitere Vorteile und Merkmale der vorliegenden Erfindung ergeben sich aus den abhängigen Ansprüchen.

Erfindungsgemäß umfasst die Achseinheit einen Achsstummel und ein Achsrohr, wobei der Achsstummel zwei Längskanäle aufweist, welche sich innerhalb des Achsstummels im Wesentlichen längs einer Stummelachse erstrecken, wobei der Achsstummel zwei Querkanäle aufweist, welche sich innerhalb des Achsstummels im Wesentlichen quer zur Stummelachse erstrecken und an der Außenfläche des Achsstummels in die Umgebung münden wobei jeweils der Längskanal und der Querkanal miteinander verbunden sind, wobei der Achsstummel einen Stummelfügebereich aufweist, an dem das hohlkörperförmig ausgebildete Achsrohr unmittelbar festgelegt oder festlegbar ist. Die Achseinheit umfasst einen zumindest bereichsweise rotationssymmetrisch um eine Stummelachse ausgebildeten Achsstummel, welcher dafür ausgelegt ist, die Radnabe oder das Fahrzeugrad eines Nutzfahrzeuges drehbar zu lagern. Besonderes Merkmal des Achsstummels ist es, dass er mit einem Kanal durchsetzt ist, wobei sich der Kanal in einen Längskanal, welcher sich im Wesentlichen längs der Stummelachse erstreckt und in einen Querkanal, welcher sich im Wesentlichen quer zur Stummelachse erstreckt, unterteilt. Besonders bevorzugt ist der Längskanal parallel zur Stummelachse in den Achsstummel eingebracht. Weiterhin bevorzugt kann es sein, dass der Querkanal von außen parallel zu einer Senkrechten zur Stummelachse in den Achsstummel eingebracht ist und an seiner tiefsten Stelle in den Längskanal mündet. Der Längskanal und der Querkanal sind insbesondere bevorzugt als Leitungen für ein Hydraulikfluid ausgebildet, wobei der Längskanal bevorzugt an der Stirnseite des Achsstummels mündet und der Querkanal an der vorzugsweise zylindrisch ausgebildeten Außen- bzw. Mantelfläche des Achsstummels mündet. Abgesehen von dem Längs- und dem Querkanal ist der Achsstummel bevorzugt vollkörperförmig ausgeführt, das heißt, der Längskanal und der Querkanal oder vorzugsweise eine Vielzahl von Längs- und Querkanälen stellen die einzigen Aussparungen bzw. Hohlräume im Achsstummel dar. Im Gegensatz hierzu ist das Achsrohr vorzugsweise hohlkörperförmig ausgebildet, wobei sich das Achsrohr besonders bevorzugt im Wesentlichen rotationssymmetrisch zu einer Rohrachse erstreckt und seine größte Erstreckung längs der Rohrachse aufweist. Das Achsrohr ist an einem Stummelfügebereich des Achsstummels an diesem festlegbar oder bevorzugt festgelegt. Die aus dem Achsstummel und dem Achsrohr gebildete Achseinheit umfasst somit einen im Wesentlichen vollkörperförmig ausgebildeten Abschnitt sowie einen hohlkörperförmig ausgebildeten Abschnitt, wobei das Gesamtgewicht der Achseinheit auf diese Weise im Vergleich zu den aus dem Stand der Technik bekannten Achssystemen deutlich reduziert werden kann. Auch ist durch die vorgeschlagene Lösung der Fertigungsaufwand deutlich reduziert, da insbesondere der Längskanal nur noch weniger als die Länge des Achsstummels aufweist und somit leichter in die Achseinheit eingebracht werden kann.

Bevorzugt ist es, dass das Achsrohr sich mit einer Rohrlänge im Wesentlichen längs einer Rohrachse erstreckt, wobei der Achsstummel sich mit einer Stummellänge längs der Stummelachse erstreckt, wobei das Verhältnis von Stummellänge zu Rohrlänge bei 0,1 bis 1,2, vorzugsweise bei 0,25 bis 0,99 und insbesondere bevorzugt bei 0,4 bis 0,7 liegt. Es hat sich gezeigt, dass das Gewicht der Achseinheit in besonderer Weise reduziert werden kann, wenn das Verhältnis der Stummellänge zur Rohrlänge bei ca. 0,1 bis 1,2 gehalten wird. Gleichzeitig ermöglicht dieses Verhältnis, dass alle erforderlichen Systeme wie Radaufhängung, Bremsträger und Lenkeraufhängung an dem Achsstummel bzw. im Übergangsbereich zwischen Achsstummel und Rohreinheit Platz finden. Versuche der Anmelderin haben gezeigt, dass bei einem Verhältnis der Stummellänge zur Rohrlänge von 0,25 bis 0,99 insbesondere für die aktuell von Herstellern für Nutzfahrzeuge angefragten Spurweiten unter Verwendung von Standardhalbzeugen für die Achsstummelherstellung besonders gute Gewichtswerte erzielt werden können. Dabei hat es sich als vorteilhaft herausgestellt, dass sowohl Achsstummel, welche zur Festlegung eines Zusatzantriebes ausgelegt sind, als auch Achsstummel, welche für starre Nutzfahrzeugachsen ohne Zusatzantrieb und somit ohne hydraulische Leitungssysteme ausgelegt sind, aus möglichst ein und demselben Typ von Halbzeugen bzw. Achsstummelrohlingen gefertigt werden. Das bevorzugte Verhältnis von Stummellänge zur Rohrlänge von 0,25 bis 0,99 ermöglichte nach Simulationen durch die Anmelderin insbesondere für diesen Anforderungskatalog besonders geringe Werte für das Gewicht der gesamten Achseneinheit. Für besonders hoch belastete Nutzfahrzeuge hat es sich als vorteilhaft herausgestellt, dass Verhältnis von Stummellänge zur Rohrlänge in einem Verhältnis von 0,4 bis 0,7 zu halten, wobei insbesondere der Minimalwert von 0,4 des Verhältnisses der Stummellänge zur Rohrlänge für einen im Vergleich zur Rohreinheit relativ langen Achsstummel steht. Dies liegt darin begründet, dass für hochbelastete Fahrzeuge, wie beispielsweise Schwerlastanhänger, möglichst kompakte Achseinheiten gefordert werden, bei welcher die Stummellänge nicht weniger als ein 0,4-faches der Rohrlänge sein sollte. Um weiterhin auch bei diesen Fahrzeugen Gewicht einsparen zu können, hat es sich als vorteilhaft gezeigt, den Maximalwert der Stummellänge relativ zur Rohrlänge nicht oberhalb von 0,7 des Verhältnisses der beiden Längen zueinander anzusetzen, da auf diese Weise der Hohlkörperanteil der Achseinheit relativ hoch gehalten wird.

In einer ferner bevorzugten Ausführungsform weist der Achsstummel im Bereich des Längskanals und/oder des Querkanals einen Verstärkungsabschnitt auf, welcher aus einem Material mit höherer Festigkeit gebildet ist als der Achsstummel. Es versteht sich, dass das Einbringen eines Längskanals und/oder eines Querkanals in den Achsstummel dessen Gesamtfestigkeit vermindert. Um die aufgrund dieses Festigkeitsverlustes notwendige Erhöhung der Materialstärke des Achsstummels in den umliegenden Bereichen so gering wie möglich zu halten, ist es bevorzugt, dass ein Verstärkungsabschnitt vorgesehen ist, welcher aus einem Material höherer Festigkeit gebildet ist als das Material des Achsstummels. In Frage kommt an dieser Stelle beispielsweise eine hochfeste Stahllegierung, welche aus Kostengründen nicht für die Herstellung des gesamten Achsstummels verwendet wird. Alternativ bevorzugt könnten auch faserverstärkte Elemente in den Achsstummel eingebracht und vorzugsweise stoffschlüssig an diesem festgelegt sein. Zur weiteren Erhöhung der Lebensdauer und der Festigkeit des Achsstummels insbesondere gegenüber periodischen Belastungen ist es bevorzugt, dass der Übergang zwischen dem Längskanal und dem Querkanal gerundet ausgeführt ist, um Kerbwirkungen in diesem Bereich auf ein Minimum zu reduzieren. Es versteht sich dann an dieser Stelle auch, dass der Verstärkungsabschnitt eine gerundete Geometrie aufweist, um vorzugsweise Kerbwirkungen zwischen dem Material des Verstärkungsabschnitts und dem umgebenden Material des Achsstummels zu verhindern bzw. zu verringern.

Vorzugsweise ist der Verstärkungsabschnitt in eine Aussparung des Achsstummels eingegossen, wobei der Längskanal und/oder der Querkanal innerhalb des Verstärkungsabschnitts vorgesehen ist. Mit anderen Worten ist also der Verstärkungsabschnitt hohlkörperförmig ausgebildet, wobei seine außenliegende Seite stoffschlüssig an dem Material des Achsstummels festgelegt ist und seine nach innen weisende Seite einen Längs- oder einen Querkanal bildet. In diesem Zusammenhang kann es bevorzugt sein, dass der Verstärkungsabschnitt in den Achsstummel eingegossen ist, wobei während des Gießvorganges ein Kern in die entsprechende Bohrung im Achsstummel eingesetzt wird, um im Verstärkungsabschnitt einen Kanal freizulassen. Der Vorteil dieser Ausführungsform ist die stoffschlüssige Verbindung zwischen dem Verstärkungsabschnitt und dem Material des Achsstummels, wobei die Abstützung des Materials des Achsstummels durch das festere Material des Verstärkungsabschnitts besonders effektiv ist. Es ist somit unter geringem Material- und Gewichtseinsatz eine hohe Festigkeit des Achsstummels erreichbar.

Erfindungsgemäß weist der Achsstummel zwei, vorzugsweise zumindest drei und insbesondere bevorzugt zumindest vier Längskanäle und Querkanäle auf. Zur Versorgung eines hydraulischen Zusatzantriebes ist es vorteilhaft, dass der Achsstummel zumindest zwei Kanäle aufweist, wobei einer dieser Kanäle als Druckzuleitung und der andere als Rückleitung für das Hydraulikfluid ausgelegt ist. Dabei kann es für den Antrieb komplexerer Zusatzmotoren auch bevorzugt sein, zumindest drei Kanäle im Achsstummel anzuordnen, wobei zwei Kanäle als Druckzuleitung und ein dritter Kanal als gemeinsame Rückleitung für Hydraulikfluid einsetzbar ist. In einer besonders bevorzugten Ausführungsform ist ein vierter Kanal vorgesehen, durch welchen ein erhitztes Hydraulikfluid in den Zusatzantrieb einleitbar ist, um bei besonders tiefen Außentemperaturen das Erreichen der nötigen Betriebstemperatur des hydraulischen Zusatzantriebes zu ermöglichen bzw. zu beschleunigen. Besonders bevorzugt ist dabei die Zahl der Ausnehmungen bzw. Bohrungen an die Anzahl der Kanäle angepasst, um insbesondere nicht zwei oder mehrere Leitungen durch eine besonders groß ausgelegte Ausnehmung bzw. Bohrung hindurchführen zu müssen und auf diese Weise die Festigkeit des Achsstummels in diesem Bereich drastisch zu reduzieren. Mit Vorteil sind die Ausnehmungen bzw. Bohrungen gleichmäßig über den Umfang des Achsstummels verteilt angeordnet.

Erfindungsgemäß ist an der Außenfläche des Achsstummels ein erster Anschlussabschnitt definiert, wobei die Mündungsstellen der Querkanäle innerhalb des ersten Anschlussabschnitts angeordnet sind, wobei der erste Anschlussabschnitt ausgehend von einer Senkrechten zur Stummelachse eine Bogenerstreckung von maximal 30° bis 120°, vorzugsweise 50° bis 110° und besonders bevorzugt von ca. 85° bis 100° aufweist. Mit anderen Worten ist der Anschlussabschnitt der Bereich an der Außenfläche des Achsstummels, in welchem die Querkanäle durch die Außenfläche des Achsstummels treten oder in die Umgebung bzw. in hydraulische Leitungselemente, welche mit den Querkanälen verbunden sind, münden. Der erste Anschlussabschnitt ist dabei mit anderen innerhalb eines bevorzugt geraden Kreiskegels angeordnet, dessen Spitze auf der Stummelachse liegt bzw. die Stummelachse schneidet, dessen Höhe senkrecht zur Stummelachse steht und dessen halber Öffnungswinkel gleich der Bogenerstreckung ist. Die Größe der Bogenerstreckung ist somit ein Wert dafür, über welchen Anteil der Außenfläche des Achsstummels sich der erste Anschlussabschnitt erstreckt. Es ist in diesem Zusammenhang besonders bevorzugt, dass der erste Anschlussabschnitt eine möglichst geringe Erstreckung aufweist und somit die Bogenerstreckung möglichst einen nur geringen Winkel von vorzugsweise 30° aufweist. Auf der anderen Seite ist es aber auch bevorzugt, dass zwischen den Querkanälen genügend Material und somit genügend Kanalwandstärke verbleibt, um die ausreichende Festigkeit insbesondere gegenüber im Hydraulikfluid auftretenden hohen Drücken zu gewährleisten. Der hier angegebene Winkelbereich von 30° bis 120° der Bogenerstreckung beinhaltet dabei die im Rahmen der vorliegenden Erfindung aufgefundenen besonders geeigneten Kompromisse aus einer einerseits möglichst kompakten Ausbildung und geringen Erstreckung des ersten Anschlussabschnitts bei einer gleichzeitig ausreichenden Festigkeit der Materialstege zwischen den Querkanälen. Der besonders bevorzugte Bereich von 50° bis 110° hat sich dabei insbesondere in Bezug auf die Verwendungsmöglichkeit von Grauguss oder Sphäroguss zur Herstellung eines Achsstummels, in welchem Querkanäle eingebracht sind, die in einem ersten Anschlussabschnitt dieses Achsstummels münden. Der insbesondere bevorzugte Bereich von 85° bis 100° hat besondere Vorteile bezüglich der Anordnung von vorzugsweise vier Querkanälen und deren Anschluss an aus dem Stand der Technik bekannte Anschlusselemente von Hydraulikleitungen bei gleichzeitiger Gewährleistung der ausreichenden Wandstärke zwischen den Querkanälen gezeigt.

In einer weiterhin bevorzugten Ausführungsform weist der erste Anschlussabschnitt ein erstes Eingriffsmittel zur Festlegung eines Leitungselements auf. Als Eingriffsmittel zur Festlegung eines Leitungselements kann dabei vorzugsweise ein Gewinde vorgesehen sein. Dieses Gewinde kann besonders bevorzugt in die Außenwand des Querkanals im Bereich des ersten Anschlussabschnitts eingebracht sein. Alternativ bevorzugt kann am ersten Anschlussabschnitt ein Vorsprung mit einem Außengewinde vorgesehen sein, an welchen ein Leitungselement auf einfache Weise aufschraubbar ist, so dass eine fluiddichte Verbindung zwischen dem Leitungselement und dem Querkanal entsteht. Insbesondere bevorzugt kann dabei sowohl ein als Innen- als auch als Außengewinde ausgebildetes Eingriffsmittel im oder am Verstärkungsabschnitt vorgesehen sein, wobei an dieser Stelle besonders von der hohen Festigkeit des Herstellungsmaterials des Verstärkungsabschnitts profitiert wird und bei einer nur geringen Materialdicke eine hohe Festigkeit der Verbindung zwischen dem Leitungselement und dem Querkanal erreichbar ist.

Weiterhin bevorzugt weist der Achsstummel an seiner dem Achsrohr abgewandten Stirnfläche einen zweiten Anschlussabschnitt mit einem zweiten Eingriffsmittel zur Verbindung des Längskanals mit einer Zusatzeinheit auf. Ähnlich der Ausbildung des ersten Eingriffsmittels kann auch das zweite Eingriffsmittel dabei als in das Material des Achsstummels oder des Verstärkungsabschnitts eingebrachtes Innengewinde sein. Alternativ bevorzugt kann ein aus der Stirnfläche des Achsstummels herausragender vorzugsweise hohlkörperförmig ausgebildeter Vorsprung mit einem Außengewinde vorgesehen sein, an welchen die entsprechenden Leitungselemente bzw. Schnittstellen einer Zusatzeinheit wie beispielsweise eines hydraulischen Zusatzantriebes angeschlossen werden können. Mit Vorteil sind dabei im zweiten Anschlussabschnitt Dichtungselemente vorgesehen, welche eine fluiddichte Verbindung zwischen dem Längskanal und der Zusatzeinheit auch bei den zu erwartenden hohen Drücken im Hydraulikfluid gewährleisten.

In einer besonders bevorzugten Ausführungsform weist der Achsstummel an seinem, dem Achsrohr abgewandten Ende einen Kraftübertragungsabschnitt auf, an welchem eine Zusatzeinheit form- und kraftschlüssig festlegbar ist. Der Kraftübertragungsabschnitt ist dabei insbesondere dafür ausgelegt, eine Zusatzeinheit derart mit dem Achsstummel zu verbinden, dass ein Drehmoment vom Achsstummel auf die Zusatzeinheit übertragbar ist und diese gleichzeitig gegen Verrutschen bzw. Herabgleiten von dem Achsstummel gesichert ist. Hierzu weist der Kraftübertragungsabschnitt vorzugsweise eine sternförmige oder zahnradförmige oder Keilwellen-Geometrie auf, welche gleichförmig um die Stummelachse ausgebildet ist. Besonders bevorzugt ist dabei an der Stirnfläche, welche in diesem bevorzugten Fall die Stirnfläche des Kraftübertragungsabschnitts ist, der zweite Anschlussabschnitt zur fluidtechnischen Verbindung der Zusatzeinheit mit dem Längskanal des Achsstummels angeordnet. Auf diese Weise ist es möglich, eine besonders kompakte Anbindung bzw. einen besonders kompakten Anbindungsbereich sowohl für die Kraft- und Momentübertragung als auch für die Übertragung von Hydraulikfluid zwischen dem Achsstummel und der Zusatzeinheit zu gewährleisten. Weiterhin wird es auf diese Weise vermieden, dass weitere Hydraulikleitungen zwischen dem Hydrauliksystem des Nutzfahrzeuges und der Zusatzeinheit außerhalb des Achsstummels der Zusatzeinheit zugeführt werden müssen, wo sie insbesondere gegenüber aufgewirbelten Teilen und anderen schädlichen Umwelteinflüssen ausgesetzt wären.

Erfindungsgemäß ist ein Fahrwerkssystem vorgesehen, welches eine Achseinheit und eine Lenkereinheit umfasst, wobei die Achseinheit einen vollkörperförmig ausgebildeten Achsstummel aufweist, wobei der Achsstummel zumindest bereichsweise rotationssymmetrisch zu einer Stummelachse ausgebildet ist und an seiner Außenfläche einen ersten Anschlussabschnitt aufweist, wobei die Lenkereinheit sich im Wesentlichen längs einer Armachse erstreckt und einen Eingriffsabschnitt aufweist, wobei der Achsstummel am Eingriffsabschnitt der Lenkereinheit derart festlegbar ist, dass die Stummelachse quer zur Armachse ausgerichtet ist, wobei der ersten Anschlussabschnitt mit in den Achsstummel eingebrachten Längskanälen und Querkanälen in Verbindung steht und zum Anschluss von Leitungselementen ausgebildet ist, wobei jeweils ein Längskanal und ein Querkanal miteinander verbunden sind, wobei der Eingriffsabschnitt eine Anschlussaussparung aufweist, welche am ersten Anschlussabschnitt derart anordenbar ist, dass der erste Anschlussabschnitt über die Anschlussaussparung zugänglich ist, wobei die Lenkereinheit mit ihrem Eingriffsabschnitt am Achsstummel der Achseinheit im Bereich des ersten Anschlussabschnitts festgelegt ist. Dabei ist die Lenkereinheit vorzugsweise der Längslenker eines Nutzfahrzeug-Fahrwerkes und ist an einem ersten distalen Ende schwenkbar mit dem Rahmen des Nutzfahrzeuges verbunden und an seinem, dem ersten Ende gegenüberliegenden zweiten Ende an einer Feder, wie beispielsweise einer Luftfeder, abgestützt. Erfindungsgemäß st es dabei, dass der Achsstummel im Bereich des ersten Anschlussabschnitts mit dem Eingriffsabschnitt der Lenkereinheit verbunden ist. Um in diesem Bereich dennoch die Zugänglichkeit des ersten Anschlussabschnitts zu gewährleisten, weist die Lenkereinheit im Bereich des ersten Eingriffsabschnitts eine Anschlussaussparung auf, welche derart dimensioniert und angeordnet ist, dass Leitungselemente durch die Anschlussaussparung hindurch zum ersten Anschlussabschnitt gelangen können und an diesem festlegbar sind. Die Festlegung der Lenkereinheit an der Achseinheit im Bereich des Achsstummels hat den Vorteil, dass die hohen Materialfestigkeitswerte des Achsstummels, welche aufgrund der Ausbildung als Vollkörper, trotz der Einbringung von Kanälen, vorhanden sind, ausgenutzt werden können, um eine besonders hohe Biegefestigkeit des Fahrwerksystems zu erreichen. Gleichzeitig ist es vorteilhaft, dass die Leitungselemente, welche zum ersten Anschlussabschnitt des Achsstummels hingeführt werden, im Bereich der Lenkereinheit angeordnet und festgelegt sind, so dass im Bereich des Fahrwerks frei und ungeschützt hängende Leitungen vermieden werden können. Es ist in diesem Zusammenhang insbesondere möglich, die Hydraulikleitungen vom Bereich der schwenkbaren Aufhängung der Lenkereinheit entlang der Lenkereinheit bis hin zum Eingriffsabschnitt mit der Anschlussaussparung zu verlegen, wobei die Hydraulikleitungen an der Lenkereinheit und insbesondere an dem als Längslenker ausgebildeten Abschnitt der Lenkereinheit fixiert werden können. Indem die Hydraulikleitungen auf der Oberseite des Längslenkers der Lenkereinheit angeordnet werden, sind sie auch gegen von unten aufgewirbelte Teile, wie beispielsweise Steine, geschützt und es kann insgesamt die Sicherheit und Lebensdauer des Hydrauliksystems des Fahrwerksystems erhöht werden.

In einer bevorzugten Ausführungsform umfasst der Eingriffsabschnitt zwei voneinander beabstandete Stege, die den Achsstummel bereichsweise umschlingen, wobei die Anschlussaussparung zwischen den Stegen angeordnet ist. Insbesondere bevorzugt können die Stege der Lenkereinheit als U-förmige Bügel ausgebildet sein, welche in bekannter Weise beispielsweise an einer Blattfeder oder einem Längslenker eines Nutzfahrzeuges verschraubt werden. Alternativ bevorzugt können die Stege auch Bereiche eines integral bzw. einstückig ausgebildeten Längslenkers sein. Die Stege weisen dabei vorzugsweise eine Materialstärke auf, die es erlaubt, die durch die Anschlussaussparung verursachte Schwächung des Materials der Lenkereinheit zu kompensieren. Zur Vermeidung von Kerbwirkung ist es bevorzugt, dass die Übergangsbereiche zwischen den Stegen und der Anschlussaussparung jeweils mit Rundungen ausgestattet sind, so dass ein besonders günstiger Kraft- und Momentenfluss im Bereich der Stege und der Anschlussaussparung erreichbar ist.

Besonders bevorzugt weisen die Anschlussaussparung und der erste Anschlussabschnitt dieselbe Erstreckung längs der Stummelachse auf und sind bevorzugt im Wesentlichen deckungsgleich. Um die durch die Anschlussaussparung verursachte Schwächung des Materials des Eingriffsabschnitts der Lenkereinheit so gering wie möglich zu halten, ist es bevorzugt, dass die Erstreckung der Anschlussaussparung möglichst gering ist. Gleichzeitig ist zu gewährleisten, dass die Anschlussaussparung den ersten Anschlussabschnitt des Achsstummels zugängig macht. Dabei ist es in diesem Zusammenhang bevorzugt, dass zumindest die Erstreckung längs der Stummelachse sowohl der Anschlussaussparung als auch des ersten Anschlussabschnitts im Wesentlichen gleich sind. Auf diese Weise ist zum einen eine genaue Anbauposition der Lenkereinheit am Achsstummel definiert und es kann gleichzeitig die Lenkereinheit durch die relativ geringe Schwächung des Materials durch die Anschlussaussparung möglichst kompakt ausgebildet werden, so dass das Gewicht des Fahrwerksystems reduziert wird. In einer besonders bevorzugten Ausführungsform sind die Anschlussaussparung und der erste Anschlussabschnitt im Wesentlichen deckungsgleich, das heißt, dass im zusammengebauten Zustand zwischen Lenkereinheit und Achsstummel die Anschlussaussparung nicht größer ist als der erste Anschlussabschnitt.

Besonders bevorzugt weist der Achsstummel benachbart zum ersten Anschlussabschnitt einen Stummelfügebereich auf, an welchem ein Achsrohr festlegbar ist. Das Achsrohr ist besonders bevorzugt ein hohlkörperförmig insbesondere bevorzugt rohrförmig ausgebildeter Körper und wird insbesondere bevorzugt mittels eines Schweißverfahrens am Stummelfügebereich des Achsstummels festgelegt. Durch die Kombination des als Vollkörper ausgebildeten Achsstummels mit einem als Hohlkörper ausgebildeten Achsrohr kann insbesondere bevorzugt das Gewicht des Fahrwerksystems gering gehalten werden, wobei gleichzeitig die Funktion der integrierten Hydraulikleitungen und die günstige Anordnung der Schnittstellen zwischen dem Hydraulikleitungssystem und den integrierten Hydraulikleitungen im Bereich des ersten Anschlussabschnitts gegeben ist. Vorzugsweise ist dabei der Anwendungsbereich benachbart zum ersten Anschlussabschnitt angeordnet, da auf diese Weise die Länge des Achsstummels möglichst kurz gehalten werden kann. Insbesondere bevorzugt ist es, dass der Stummelfügebereich einen als Rücksprung ausgebildeten Abschnitt umfasst, auf welchen das Achsrohr aufschiebbar ist. Auf diese Weise können zusätzlich zur zwischen dem Achsstummel und dem Achsrohr vorzugsweise eingerichteten Schweißverbindung Biegemomente mit einem Hebelarm, welcher gleich der Überlappungslänge zwischen dem Achsstummel und dem Achsrohr ist, übertragen werden.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass im Rahmen der vorliegenden Erfindung Merkmale einzelner Ausführungsformen auch in anderen Ausführungsformen Anwendung finden können, sofern dies nicht explizit ausgeschlossen ist oder sich aufgrund technischer Gegebenheiten verbietet.

Es zeigen:
- Fig. 1: eine perspektivische Ansicht einer bevorzugte Ausführungsform des erfindungsgemäßen Fahrwerksystems,
- Fig. 2: eine Draufsicht auf die in Fig. 1 gezeigte bevorzugte Ausführungsform des erfindungsgemäßen Fahrwerkssystems,
- Fig. 3: eine weitere Schnittansicht der in den Fig. 1 und 2 gezeigten Ausführungsform des Fahrwerkssystems,
- Fig. 4: eine Schnittansicht einer bevorzugten Ausführungsform der erfindungsgemäßen Achseinheit, und
- Fig. 5: eine perspektivische Ansicht einer bevorzugten Ausführungsform des erfindungsgemäßen Fahrwerksystems.

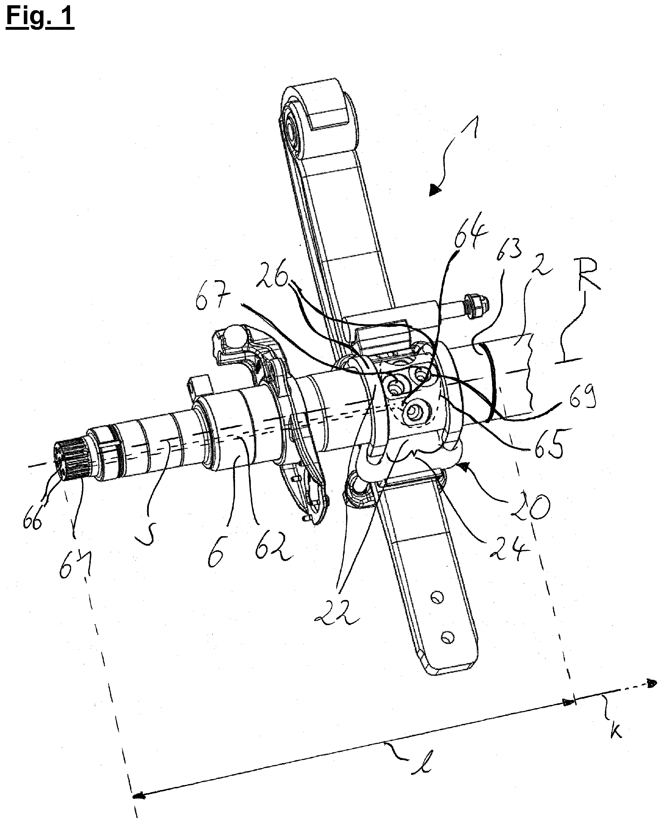

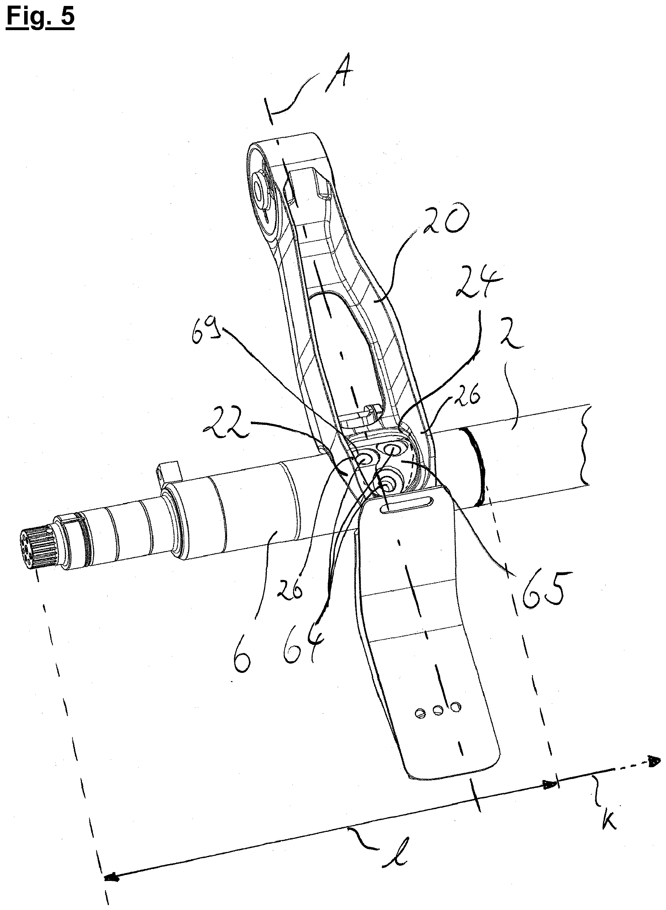

In der bevorzugten Ausführungsform von Fig. 1 umfasst das Fahrwerksystem 1 einen Achsstummel 6, eine Lenkereinheit 20 sowie ein vorzugsweise am Achsstummel 6 festgelegtes Achsrohr 2. Der Achsstummel 6 erstreckt sich im Wesentlichen längs einer Stummelachse S und ist zumindest bereichsweise rotationssymmetrisch zu dieser Stummelachse S ausgebildet. Die rotationssymmetrische Ausbildung des Achsstummels 6 bezieht sich dabei insbesondere auf dessen Außenflächen, da im Inneren des Achsstummels 6 bevorzugt zumindest ein Längskanal 62 sowie zumindest ein Querkanal 64 vorgesehen ist, welcher eine Abweichung von der Rotationssymmetrie darstellt. Von den in dem Achsstummel 6 angeordneten Längskanälen 62 ist in der Figur nur einer dargestellt (gestrichelt). An seinem in der Figur links gezeigten, vom Achsrohr 2 abgewandten Ende weist der Achsstummel 6 einen Kraftübertragungsabschnitt 61 auf. Der Kraftübertragungsabschnitt 61 dient der Festlegung einer Zusatzeinheit (nicht gezeigt) und der Übertragung eines Momentes von der Zusatzeinheit auf den Achsstummel 6. Weiterhin ist an der in der Figur links gezeigten Stirnfläche des Achsstummels 6 zumindest ein zweiter Anschlussabschnitt 66 vorgesehen, welcher dazu dient, entsprechende Hydraulikleitungen der Zusatzeinheit mit dem oder der Vielzahl von Längskanälen 62 fluiddicht zu verbinden. Der Achsstummel 6 weist weiterhin einen ersten Anschlussabschnitt 65 auf, welcher bevorzugt an der Oberfläche bzw. der äußeren Mantelfläche des Achsstummels 6 angeordnet ist und besonders bevorzugt der Bereich ist, in dem die Querkanäle 64 aus dem Achsstummel 6 heraustreten. Die Querkanäle 64 sind in ihrem Mündungsbereich an der Mantelfläche des Achsstummels 6 vorzugsweise mit einem Verstärkungsabschnitt 69 versehen. Anstelle eines integral ausgebildeten Längslenkers bzw. einer Lenkereinheit 20 wie in Fig. 5 dargestellt, ist ein mehrteiliger Längslenker vorgesehen ist. Die Stege 26 der Lenkereinheit 20 sind dabei vorzugsweise als U-förmige Bügel ausgeführt, welche gegenüber einem als Federelement ausgeführten Trägerarm gegen den Achsstummel 6 verspannt sind. Die Lenkereinheit 20 ist mit ihrem Eingriffsabschnitt 22 an dem Achsstummel festgelegt, wobei in der Figur nur der obenliegende Teil bzw. der zum Betrachter hinweisende Teil des Eingriffsabschnitts 22 gezeigt ist. Im Bereich des Eingriffsabschnitts 22 weist die Lenkereinheit 20 vorzugsweise eine Anschlussaussparung 24 auf, durch welche insbesondere die Zugänglichkeit des ersten Anschlussabschnitts 65 des Achsstummels 6 gewährleistet ist. Benachbart zum ersten Anschlussabschnitt 65 und somit vorzugsweise zum Anbindungsbereich zwischen Lenkereinheit 20 und Achsstummel 6 weist der Achsstummel einen Stummelfügebereich 63 auf. Am Fügebereich 63 ist vorzugsweise das Achsrohr 2 festgelegt. Dabei ist vorzugsweise ein Überlappungsbereich zwischen dem Achsrohr 2 und dem Stummelfügebereich 63 vorgesehen, welcher dazu dient, zusätzliche Biege- und Torsionsmomente zwischen Achsrohr 2 und Achsstummel 6 zu übertragen. Bevorzugt weist die Lenkereinheit 20 im Bereich des Eingriffsabschnitts 22 zwei Stege 26 auf, zwischen denen die Anschlussaussparung 24 angeordnet ist. Die Stege 26 erlauben dabei insbesondere eine für Kraftfluss bei geringen Spannungsspitzen optimierte Geometrie der Lenkereinheit 20, um die entsprechenden Biegemomente im Bereich des Eingriffsabschnitts 22 übertragen zu können. An der in der Figur gezeigten unteren Seite der Lenkereinheit 20 ist schematisch ein Aufnahmebereich für eine Luftfeder dargestellt.

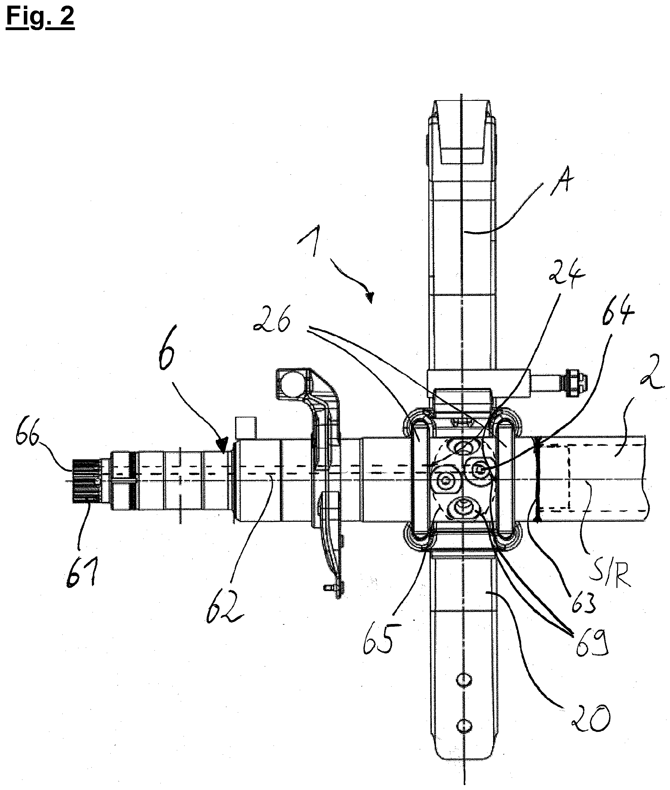

Fig. 2 zeigt eine Draufsicht der bevorzugten Ausführungsform von Fig. 1. Hierbei ist die bevorzugte Erstreckung der Anschlussaussparung 24 und dem durch diese zugänglichen Anschlussabschnitt 65 (gestrichelt dargestellt) erkennbar. Weiterhin ist die Armachse A dargestellt entlang derer sich die Lenkereinheit 20 im hauptsächlich erstreckt. Vorzugsweise begrenzen die Stegelemente 26 die Anschlussaussparung 24 in einer parallel zur Stummelachse S verlaufenden Richtung. Weiterhin ist eine bevorzugte Ausbildung des Stummelfügebereiches 63 dargestellt, welcher dafür ausgelegt ist zumindest bereichsweise mit dem Achsrohr 2 zu überlappen. Das Achsrohr 2 und der Achsstummel 6 werden bevorzugt mittels eines Schweißverfahrens stoffschlüssig zusammengefügt. Hierbei ergeben sich die besten Festigkeitswerte der Verbindung zwischen dem Achsstummel 6 und dem Achsrohr 2. Bevorzugt kommt ein Reibschweißverfahren, besonders bevorzugt ein Rotationsreibschweißverfahren, zum Einsatz, da dieses ein besonders festes Materialgefüge erzeugt. Für den Fall, dass die Möglichkeit einer nachträglichen Auftrennung der Verbindung zwischen dem Achsstummel 6 und dem Achsrohr 2 erhalten bleiben soll, insbesondere bei wartungsintensiven Fahrzeugen, kann auch ein Lichtbogenschweißverfahren zur Verbindung des Achsstummels 6 mit dem Achsrohr 2 eingesetzt werden.

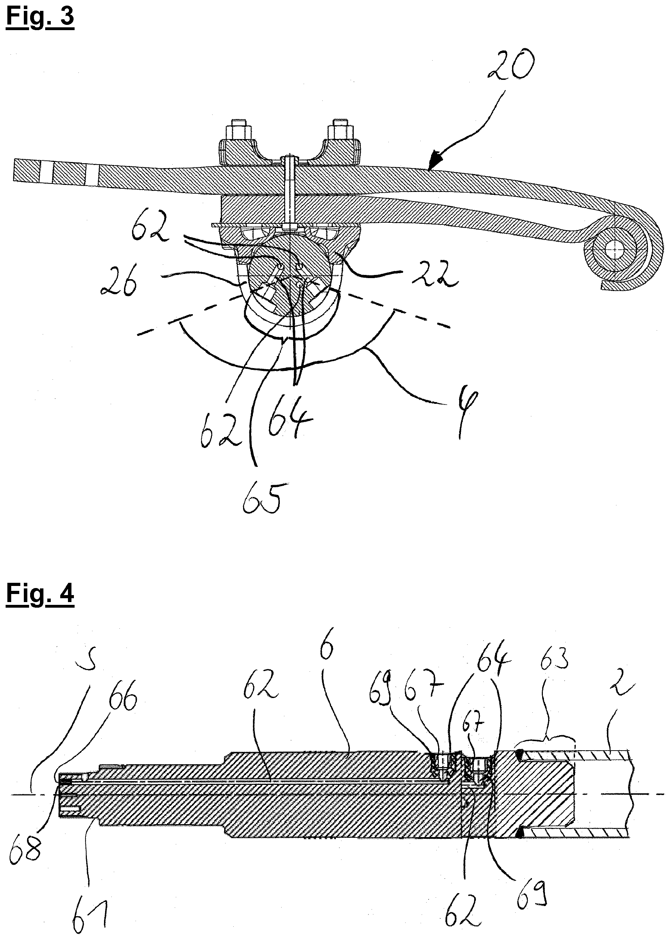

Fig. 3 zeigt eine Schnittansicht der bevorzugten Ausführungsform von Fig. 1 und 2. Dabei ist der Verlauf der Querkanäle 64 im Achsstummel 6 verdeutlicht. Die beiden in dieser Schnittebene geschnittenen Querkanäle 64 sind mit je einem, sich im Wesentlichen parallel zur Stummelachse S verlaufenden Längskanal 62 fluiddicht verbunden und münden an der Außenfläche des Achsstummels 6 im Anschlussabschnitt 65. Dabei weisen die Querkanäle 64 in ihrem Mündungsbereich Eingriffsmittel zum Festlegen einer Fluidleitung oder eines Rohres auf, über welche vorzugsweise Hydraulikfluid in den Achsstummel 6 eingeleitet und aus diesem wieder herausgeleitet werden kann. Der Anschlussabschnitt 65 weist vorzugsweise eine maximale Erstreckung entlang des Umfangs der Außenfläche des Achsstummels 6 mit einer Bogenerstreckung ϕ auf. Die Bogenerstreckung ϕ ist vorzugsweise ein Bogenwinkel und wird in einer Ebene, die senkrecht zur Stummelachse S steht, gemessen.

Fig. 4 zeigt eine Schnittansicht einer bevorzugten Ausführungsform des erfindungsgemäßen Achsstummels 6. Dabei ist der rechte der beiden Querkanäle 64 in einer tieferen Schnittebene dargestellt als der linke Querkanal 64. Die verdeutlicht die Anordnung der Längskanäle 62 und Querkanäle 64 in vom Betrachter aus gesehen verschiedenen Tiefen in dem Achsstummel 6. Der Längskanal 62 erstreckt sich zwischen einem zweiten Anschlussabschnitt 66 parallel zur Stummelachse S bis hin zu seinem Übergang in den Querkanal 64. Im ersten Anschlussabschnitt 65 weist der Querkanal ein erstes Eingriffsmittel 67 auf, über welches ein Leitungselement (nicht gezeigt) festlegbar ist. Besonders bevorzugt ist das erste Eingriffsmittel 67 in den Verstärkungsabschnitt 69 eingebracht, welcher vorzugsweise am Querkanal 64 vorgesehen ist. Als vorteilhaft hat sich eine lösbare Verbindung zwischen dem Querkanal 64 und einem Leitungselement erwiesen, wobei vorzugsweise ein Gewinde, besonders bevorzugt ein selbstblockierendes und selbstdichtendes Gewinde eingesetzt wird. Am zweiten Anschlussabschnitt 66 weist der Längskanal 62 vorzugsweise ein zweites Eingriffsmittel 68 auf, welches ähnlich dem ersten Eingriffsmittel 67 mit Vorteil als Gewinde ausgebildet ist. Alternativ kann das erste Eingriffsmittel 67 und/oder das zweite Eingriffsmittel 68 auch als formschlüssiger Einrastmechanismus ausgebildet sein oder mit Vorteil einen Bajonettverschluss aufweisen, um eine möglichst einfache Montage der Hydraulikleitungen zu erreichen. An seinem, dem zweiten Anschlussabschnitt 66 und dem Kraftübertragungsabschnitt 61 gegenüberliegenden Ende weist der Achsstummel 6 einen Stummelfügebereich 63 auf, über welchen das Achsrohr 2 vorzugsweise sowohl formschlüssig durch eine Überlappung, als auch stoffschlüssig über eine Schweißverbindung am Achsstummel 6 festgelegt ist.

Fig. 5 zeigt eine perspektivische Ansicht einer weiteren bevorzugten Ausführungsform des erfindungsgemäßen Fahrwerksystems. Dabei ist die Lenkereinheit 20 in ihrem Eingriffsabschnitt 22 an dem Achsstummel 6 festgelegt. Im Bereich des ersten Anschlussabschnitts 65 des Achsstummels 6 weist die Lenkereinheit 20 eine Anschlussaussparung 24 auf, welche den Zugang zu den entsprechenden Querkanälen 64 im Bereich des ersten Anschlussabschnitts 65 ermöglicht. Weiterhin sind in der Figur deutlich die Verstärkungsabschnitte 69 erkennbar, welche die jeweiligen Querkanäle 64 in ihrer Festigkeit unterstützen. Vorzugsweise ist die Länge des Achsstummels 6 zwischen dem ersten Anschlussabschnitt 65 und dem in der Figur links gezeigten Kraftübertragungsabschnitt 61 derart ausgelegt, dass ausreichend Platz zur Anbringung eines Radlagers und zur Festlegung weiterer Elemente, wie beispielsweise eines in Fig. 1 und 2 angedeuteten Bremsträgers, vorhanden ist. Im Rahmen der vorliegenden Erfindung ist es bevorzugt, die Stummellänge I möglichst gering zu halten, um das Gewicht der Achseinheit zu vermindern, gleichzeitig muss die Stummellänge I aber groß genug sein, um entsprechend genügend Bauraum zur Anbringung der Radaufhängung und weiterer Periphersysteme, wie beispielsweise eines Bremsträgers, zu gewährleisten. Aus diesen Anforderungen ergibt sich ein bevorzugter Verhältnisbereich der Stummellänge I zur Rohrlänge k von 0,1 bis 1,2. Im Unterschied zu der in Fig. 1 und 2 gezeigten Ausführungsform des Fahrwerkssystems ist die Lenkereinheit 20 von Fig. 5 vorzugsweise als kraftflussoptimiertes Gußteil und besonders bevorzugt einstückig ausgebildet.

**Bezugszeichen:**

| | | | |
|---|---|---|---|
| 1 | -Fahrwerkssystem | 24 | -Anschlussaussparung |
| 2 | -Achsrohr | 26 | -Steg |
| 6 | -Achsstummel | 61 | -Kraftübertragungsabschnitt |
| 20 | -Lenkereinheit | 62 | - Längskanal |
| 22 | - Eingriffsabschnitt | 63 | - Stummelfügebereich |
| 64 | -Querkanal | ϕ | -Bogenerstreckung |
| 65 | -erster Anschlussabschnitt | A | -Armachse |
| 66 | -zweiter Anschlussabschnitt | k | -Rohrlänge |
| 67 | -erstes Eingriffsmittel | I | -Stummellänge |
| 68 | -zweites Eingriffsmittel | R | -Rohrachse |
| 69 | -Verstärkungsabschnitt | S | -Stummelachse |

## Patentansprüche

1. Achseinheit umfassend einen Achsstummel (6) und ein Achsrohr (2),
wobei der Achsstummel (6) zwei Längskanäle (62) aufweist, welche sich innerhalb des Achsstummels (6) im Wesentlichen längs einer Stummelachse (S) erstrecken,
wobei der Achsstummel (6) zwei Querkanäle (64) aufweist, welche sich innerhalb des Achsstummels (6) im Wesentlichen quer zur Stummelachse (S) erstrecken und an der Außenfläche des Achsstummels (6) in die Umgebung münden,
wobei jeweils ein Längskanal (62) und ein Querkanal (64) miteinander verbunden sind,
wobei der Achsstummel (6) einen Stummelfügebereich (63) aufweist, an dem das hohlkörperförmig ausgebildete Achsrohr (2) unmittelbar festlegbar ist, wobei an der Außenfläche des Achsstummels (6) ein erster Anschlussabschnitt (65) definiert ist,
wobei die Mündungsstellen der Querkanäle (64) innerhalb des ersten Anschlussabschnitts (65) angeordnet sind,
wobei der erste Anschlussabschnitt (65) ausgehend von einer Senkrechten zur Stummelachse (S) eine Bogenerstreckung (ϕ) von maximal 30° bis 120° aufweist.

2. Achseinheit nach Anspruch 1,
wobei das Achsrohr (2) sich im Wesentlichen längs einer Rohrachse (R) mit einer Rohrlänge (k) erstreckt, wobei der Achsstummel (6) sich längs der Stummelachse (S) mit einer Stummellänge (I) erstreckt,
wobei das Verhältnis von Stummellänge (I) zu Rohrlänge (k) bei 0,1 bis 1,2 vorzugsweise bei 0,25 bis 0,99 und insbesondere bevorzugt bei 0,4 bis 0,7 liegt.

3. Achseinheit nach einem der vorhergehenden Ansprüche,
wobei der Achsstummel (6) im Bereich der Längskanäle (62) und/oder der Querkanäle (64) einen Verstärkungsabschnitt (69) aufweist, welcher aus einem Material mit höherer Festigkeit gebildet ist als der Achsstummel (6).

4. Achseinheit nach Anspruch 3,
wobei der Verstärkungsabschnitt (69) in eine Aussparung des Achsstummels (6) eingegossen ist, und
wobei jeder Längskanal (62) und/oder jeder Querkanal (64) innerhalb des Verstärkungsabschnitts (69) vorgesehen ist.

5. Achseinheit nach einem der vorhergehenden Ansprüche,
wobei der Achsstummel (6) drei und bevorzugt zumindest vier Längskanäle (62) und Querkanäle (64) aufweist.

6. Achseinheit nach einem der vorhergehenden Ansprüche,
wobei der erste Anschlussabschnitt (65) ausgehend von einer Senkrechten zur Stummelachse (S) eine Bogenerstreckung (ϕ) von maximal 50° bis 110° und bevorzugt von ca. 85° bis 100° aufweist.

7. Achseinheit nach Anspruch 5,
wobei der erste Anschlussabschnitt (65) ein erstes Eingriffsmittel (67) zur Festlegung eines Leitungselements aufweist.

8. Achseinheit nach einem der vorhergehenden Ansprüche,
wobei der Achsstummel (6) an seiner, dem Achsrohr (2) abgewandten Stirnfläche einen zweiten Anschlussabschnitt (66) mit einem zweiten Eingriffsmittel (68) zur Verbindung des Längskanals (62) mit einer Zusatzeinheit aufweist.

9. Achseinheit nach einem der vorhergehenden Ansprüche,
wobei der Achsstummel (6) an seinem, dem Achsrohr abgewandten Ende einen Kraftübertragungsabschnitt (61) aufweist, an welchem eine Zusatzeinheit form- und kraftschlüssig festlegbar ist.

10. Fahrwerkssystem (1) umfassend eine Achseinheit und eine Lenkereinheit (20),
wobei die Achseinheit einen vollkörperförmig ausgebildeten Achsstummel (6) aufweist,
wobei der Achsstummel (6) zumindest bereichsweise rotationssymmetrisch zu einer Stummelachse (S) ausgebildet ist und an seiner Außenfläche einen ersten Anschlussabschnitt (65) aufweist,
wobei die Lenkereinheit (20) sich im Wesentlichen längs einer Armachse (A) erstreckt und einen Eingriffsabschnitt (22) aufweist,
wobei der Achsstummel (6) am Eingriffsabschnitt (22) der Lenkereinheit (20) derart festlegbar ist, dass die Stummelachse (S) quer zur Armachse (A) ausgerichtet ist,
der ersten Anschlussabschnitt (65) mit in den Achsstummel (6) eingebrachten Längskanälen (62) und Querkanälen (64) in Verbindung steht und zum Anschluss von Leitungselementen ausgebildet ist, wobei jeweils ein Längskanal und ein Querkanal miteinander verbunden sind, wobei der Eingriffsabschnitt (22) eine Anschlussaussparung (24) aufweist, welche am ersten Anschlussabschnitt (65) derart anordenbar ist, dass der erste Anschlussabschnitt (65) über die Anschlussaussparung (24) zugänglich ist,
wobei die Lenkereinheit (20) ; mit ihrem Eingriffsabschnitt am Achsstummel (6) der Achseinheit im Bereich des ersten Anschlussabschnitts (65) festgelegt ist.

11. Fahrwerkssystem (1) nach Anspruch 10,
wobei der Eingriffsabschnitt (22) zwei voneinander beabstandete Stege (26) umfasst, die den Achsstummel (6) bereichsweise umschlingen,
wobei die Anschlussaussparung (24) zwischen den Stegen (26) angeordnet ist.

12. Fahrwerkssystem (1) nach einem der Ansprüche 10 oder 11,
wobei die Anschlussaussparung (24) und der Anschlussabschnitt (65) dieselbe Erstreckung längs der Stummelachse (S) aufweisen und bevorzugt im Wesentlichen deckungsgleich sind.

13. Fahrwerkssystem (1) nach einem der Ansprüche 10 bis 12,
wobei der Achsstummel (6) benachbart zum Anschlussabschnitt einen Stummelfügebereich (63) aufweist, an welchem ein Achsrohr (2) festlegbar ist.

## Claims

1. An axle unit comprising a stub axle (6) and an axle tube (2),
wherein the stub axle (6) has two longitudinal channels (62) which extend inside the stub axle (6) substantially along a stub axis (S),
wherein the stub axle (6) has two transverse channels (64) which extend inside the stub axle (6) substantially transversely to the stub axis (S) and open to the environment at the outer face of the stub axle (6),
wherein in each case a longitudinal channel (62) and a transverse channel (64) are connected together,
wherein the stub axle (6) has a stub joining region (63) onto which the hollow-bodied axle tube (2) can be secured directly,
wherein a first connecting portion (65) is defined on the outer face of the stub axle (6),
wherein the opening points of the transverse channels (64) are arranged inside the first connecting portion (65),
wherein the first connecting portion (65), starting from a vertical to the stub axis (S), has an arcuate extension (ϕ) of maximum 30° to 120°.

2. The axle unit as claimed in claim 1,
wherein the axle tube (2) extends with a tube length (k) substantially along a tube axis (R), and
wherein the stub axle (6) extends with a stub length (I) substantially along the stub axis (S),
wherein the ratio of the stub length (I) to the tube length (k) is 0.1 to 1.2, preferably 0.25 to 0.99, and particularly preferably 0.4 to 0.7.

3. The axle unit as claimed in any of the preceding claims,
wherein the stub axle (6) has a reinforcing portion (69) in the region of the longitudinal channels (62) and/or the transverse channels (64), which reinforcing portion is formed from a material with higher strength than the stub axle (6).

4. The axle unit as claimed in claim 3,
wherein the reinforcing portion (69) is cast into a recess of the stub axle (6), and
wherein each longitudinal channel (62) and/or each transverse channel (64) is provided inside the reinforcing portion (69).

5. The axle unit as claimed in any of the preceding claims,
wherein the stub axle (6) has three, and preferably at least four longitudinal channels (62) and transverse channels (64).

6. The axle unit as claimed in any of the preceding claims,
wherein the first connecting portion (65), starting from a vertical to the stub axis (S), has an arcuate extension (ϕ) of maximum 50° to 110°, and preferably approximately 85° to 100°.

7. The axle unit as claimed in claim 5,
wherein the first connecting portion (65) has a first engagement means (67) for securing a line element.

8. The axle unit as claimed in any of the preceding claims,
wherein at its end face facing away from the axle tube (2), the stub axle (6) has a second connecting portion (66) with a second engagement means (68) for connecting the longitudinal channel (62) to an additional unit.

9. The axle unit as claimed in any of the preceding claims, wherein at its end facing away from the axle tube, the stub axle (6) has a force transmission portion (61) onto which an additional unit can be secured by form and force fit.

10. A chassis system (1) comprising an axle unit and a suspension arm unit (20),
wherein the axle unit has a stub axle (6) configured as a solid body,
wherein the stub axle (6) at least in regions is configured rotationally symmetrically to a stub axis (S) and has a first connecting portion (65) on its outer face,
wherein the suspension arm unit (20) extends substantially along an arm axis (A) and has an engagement portion (22),
wherein the stub axle (6) can be secured to the engagement portion (22) of the suspension arm unit (20) such that the stub axis (S) is oriented transversely to the arm axis (A),
the first connecting portion (65) is connected to the longitudinal channels (62) and transverse channels (64) made in the stub axle (6) and is configured for connection of line elements,
wherein in each case a longitudinal channel (62) and a transverse channel (64) are connected together,
wherein the engagement portion (22) has a connecting recess (24) which can be arranged on the first connecting portion (65) such that the first connecting portion (65) is accessible via the connecting recess (24),
wherein the suspension arm unit (20) with its engagement portion is secured to the stub axle (6) of the axle unit in the region of the first connecting portion (65).

11. The chassis system (1) as claimed in claim 10,
wherein the engagement portion (22) comprises two webs (26) which are spaced apart from each other and surround the stub axle (6) in regions, wherein the connecting recess (24) is arranged between the webs (26).

12. The chassis system (1) as claimed in one of claims 10 or 11, wherein the connecting recess (24) and the connecting portion (65) have the same extension along the stub axis (S) and are preferably substantially congruent.

13. The chassis system (1) as claimed in any of claims 10 to 12, wherein adjacent to the connecting portion, the stub axle (6) has a stub joining region (63) onto which an axle tube (2) can be secured.

## Revendications

1. Ensemble d'essieu comprenant un moignon d'essieu (6) et un tube d'essieu (2),
dans lequel
le moignon d'essieu (6) comprend deux canaux longitudinaux (62) qui s'étendent sensiblement le long d'un axe de moignon (S) à l'intérieur du moignon d'essieu (6),
le moignon d'essieu (6) comprend deux canaux transversaux (64) qui s'étendent sensiblement transversalement à l'axe de moignon (S) à l'intérieur du moignon d'essieu (6) et qui débouchent dans l'environnement sur la surface extérieure du moignon d'essieu (6),
respectivement un canal longitudinal (62) et un canal transversal (64) sont reliés l'un à l'autre,
le moignon d'essieu (6) comprend une zone d'assemblage de moignon (63) sur laquelle peut être immobilisé directement le tube d'essieu (2) réalisé en forme de corps creux,
une première portion de raccordement (65) est définie sur la surface extérieure du moignon d'essieu (6),
les emplacements d'embouchure des canaux transversaux (64) sont disposés à l'intérieur de la première portion de raccordement (65),
la première portion de raccordement (65) présente une extension arquée (ϕ) au maximum de 30° à 120° à partir d'une perpendiculaire à l'axe de moignon (S).

2. Ensemble d'essieu selon la revendication 1,
dans lequel
le tube d'essieu (2) s'étend sensiblement le long d'un axe de tube (R) ayant une longueur de tube (k),
le moignon d'essieu (6) s'étend le long de l'axe de moignon (S) avec une longueur de moignon (I),
le rapport de la longueur de moignon (I) sur la longueur de tube (k) est de 0,1 à 1,2, de préférence de 0,25 à 0,99, et de manière particulièrement préférée de 0,4 à 0,7.

3. Ensemble d'essieu selon l'une des revendications précédentes,
dans lequel
au niveau des canaux longitudinaux (62) et/ou des canaux transversaux (64), le moignon d'essieu (6) présente une portion de renfort (69) qui est réalisée en un matériau ayant une solidité supérieure à celle du moignon d'essieu (6).

4. Ensemble d'essieu selon la revendication 3,
dans lequel
la portion de renfort (69) est coulée dans une échancrure du moignon d'essieu (6), et
chaque canal longitudinal (62) et/ou chaque canal transversal (64) est prévu à l'intérieur de la portion de renfort (69).

5. Ensemble d'essieu selon l'une des revendications précédentes,
dans lequel
le moignon d'essieu (6) comprend trois et de préférence au moins quatre canaux longitudinaux (62) et trois et de préférence au moins quatre canaux transversaux (64).

6. Ensemble d'essieu selon l'une des revendications précédentes,
dans lequel
la première portion de raccordement (65) présente une extension arquée (ϕ) au maximum de 50° à 110° et de préférence d'environ 85° à 100° à partir d'une perpendiculaire à l'axe de moignon (S).

7. Ensemble d'essieu selon la revendication 5,
dans lequel
la première portion de raccordement (65) comprend un premier moyen d'engagement (67) pour immobiliser un élément de conduction.

8. Ensemble d'essieu selon l'une des revendications précédentes,
dans lequel
sur sa surface frontale détournée du tube d'essieu (2), le moignon d'essieu (6) comprend une seconde portion de raccordement (66) ayant un second moyen d'engagement (68) pour relier le canal longitudinal (62) à un ensemble d'appoint.

9. Ensemble d'essieu selon l'une des revendications précédentes,
dans lequel
à son extrémité détournée du tube d'essieu, le moignon d'essieu (6) comprend une portion de transmission de force (61) sur laquelle peut être immobilisé par coopération de forme et de force un ensemble d'appoint.

10. Système de train de roulement (1) comprenant un ensemble d'essieu et un ensemble de bras de direction (20),
dans lequel
l'ensemble d'essieu comprend un moignon d'essieu (6) réalisé en forme de corps plein,
le moignon d'essieu (6) est réalisé au moins localement à symétrie de révolution par rapport à un axe de moignon (S) et comprend une première portion de raccordement (65) sur sa surface extérieure,
l'ensemble de bras de direction (20) s'étend sensiblement le long d'un axe de bras (A) et comprend une portion d'engagement (22),
le moignon d'essieu (6) peut être immobilisé sur la portion d'engagement (22) de l'ensemble de bras de direction (20) de telle sorte que l'axe de moignon (S) est orienté transversalement à l'axe de bras (A),
la première portion de raccordement (65) est en communication avec des canaux longitudinaux (62) et avec des canaux transversaux (64) ménagés dans le moignon d'essieu (6) et est réalisée pour être raccordée à des éléments de conduction,
respectivement un canal longitudinal et un canal transversal sont reliés l'un à l'autre,
la portion d'engagement (22) présente une échancrure de raccordement (24) qui peut être positionnée sur la première portion de raccordement (65) de telle sorte que la première portion de raccordement (65) est accessible via l'échancrure de raccordement (24),
l'ensemble de bras de direction (20) est immobilisé par sa portion d'engagement sur le moignon d'essieu (6) de l'ensemble d'essieu au niveau de la première portion de raccordement (65).

11. Système de train de roulement (1) selon la revendication 10,
dans lequel la portion d'engagement (22) comprend deux barrettes (26) espacées l'une de l'autre et entourant localement le moignon d'essieu (6),
l'échancrure de raccordement (24) est disposée entre les barrettes (26).

12. Système de train de roulement (1) selon l'une des revendications 10 ou 11,
dans lequel l'échancrure de raccordement (24) et la portion de raccordement (65) présentent la même extension le long de l'axe de moignon (S) et sont de préférence sensiblement en coïncidence.

13. Système de train de roulement (1) selon l'une des revendications 10 à 12,
dans lequel, au voisinage de la portion de raccordement, le moignon d'essieu (6) présente une zone d'assemblage de moignon (63) sur laquelle peut être immobilisé un tube d'essieu (2).
